# EUROPEAN PATENT SPECIFICATION

(11) **EP 4 110 837 B1**
(45) Date of publication and mention of the grant of the patent: **22.04.2026**
(21) Application number: 21706278.5
(22) Date of filing: 22.02.2021
(51) Int. Cl.: C08F 14/26, C08F 214/26, C08F 293/00, C08L 53/00, C10M 107/38, C08F 2/48, C08F 16/14, C08F 116/14, C08L 71/02

(54) **(PER)FLUOROPOLYETHER POLYMER COMPOSITIONS**
(PER)FLUORPOLYETHER-POLYMER-ZUSAMMENSETZUNGEN
COMPOSITIONS DE POLYMÈRE DE (PER)FLUOROPOLYÉTHER

(30) Priority: 24.02.2020 EP 20159015
(43) Date of publication of application: 04.01.2023
(73) Proprietor: Syensqo Specialty Polymers Italy S.p.A., 20021 Bollate (MI) (IT)
(72) Inventor: HAMON, Christine, 20021 Bollate (MI) (IT); BEA, Michela, 21040 Carnago (VA) (IT)
(74) Representative: Benvenuti, Federica
(86) International application number: PCT/EP2021/054273
(87) International publication number: WO 2021/170521

(56) References cited:
- US-B2- 8 258 090

## Description

### Cross Reference to related applications

This application claims priority filed on 24 February 2020 in Europe with No. 20159015.5.

### Technical Field

The present invention relates to compositions comprising at least one (per)fluoropolyether base oil and at least one polymer obtained by the copolymerization of (per)fluoropolyether (PFPE), tetrafluoroethylene (TFE) and at least one non-homopolymerizable olefin.

### Background Art

It is known in the art that polymerizing perfluorinated olefins in the presence of a perfluorinated polyperoxides allows to synthetize polymers in the form of greases.

For example, US 3,493,530 (Montecatini Edison S.p.A.) discloses a process for polymerizing halogenated olefins with a macromolecular perfluorinated polyperoxide, such that polymeric mixtures are formed during the reaction, in very wide ratios, depending on the initial amount of monomers and polyperoxide. Such reaction allows to obtain homogeneous greases that can be used as lubricants. According to this document, the polymerization can be performed under heating, or at room temperature in the presence of UV radiation.

US 4,500,739 (Montedison S.p.A.) discloses perfluoropolyether comprising, besides -CF₂- and -C₂F₄- recurring units, also a third fluoroalkylene unit containing three or more carbon atoms, said unit being connected to each other through -O-ether bridges, and process for obtaining said polyether, consisting in reacting a mixture of polyperoxidic perfluoropolyether and a fluorinated olefin, in the presence of U.V. radiations.

More recently, US 8,258,090 (Solvay Solexis S.p.A.) discloses fluorinated lubricants of formula (I) :

T-O-[A-B]_{z}-[A-B']_{z'}-A-T' (I)

wherein A represents a perfluoropolyether chain and B represents a block formed of units deriving from one or more olefins, wherein at least one of them is polymerizable by radical route. This patent provides a very long list of suitable olefins, and the synthesis via thermal process is the preferred synthetic route.

WO 2016/150941 (Solvay Specialty Polymers Italy S.p.A.) discloses highly viscous fluids suitable for use as damping fluids. In other words, these polymers are highly viscous fluids, that can be provided within damper devices to absorb and damp shock impulses. Among the others, Example 10 of this patent application discloses the synthesis of a polymer containing segments from PFPE, TFE and perfluoromethyl vinyl ether (PMVE) via photochemical route, such that the polymer thus obtained comprises 19.2 wt.% of blocks of formula -(BO)_{q}- (the wt.% being based on the total weight of the polymer) wherein B comes from TFE (10.8% w/w) and PMVE (8.4% w/w). Despite such polymer is highly viscous, it is provided in the form of oil.

WO 2018/185026 (Solvay Specialty Polymers Italy S.p.A.) discloses a liquid composition comprising physical mixture of a least one (per)fluoropolyether polymer and at least one amorphous polymer.

US8258090B2 discloses lubricant compositions comprising a polymer containing blocks of PFPE and blocks formed of units derived from fluorinated olefins.

### Summary of invention

The Applicant surprisingly found that a composition having optimized dynamic viscosity compared to compositions already known from the prior art can be provided by mixing two PFPE-based polymers.

Advantageously, said composition can be used as lubricant without the need of adding viscosity modifiers, such as for example the solid particles described in WO 2016/150941 cited above.

Thus, in a first aspect, the present invention relates to a composition [composition (C)] comprising :
(I) at least one polymer [polymer (P)] complying with chemical formula (I)

   T-O-[A-B]_{z}-[A-B']_{z'}-A-T' (I)

   A is -(X)ₐ-O-(R_{f})-(X')_{b}- in which
      (R_{f}) is a fully or partially fluorinated polyoxyalkylene chain,
      X and X', equal to or different from each other, are selected from

         -CF₂-, -CF₂CF₂- and -CF(CF₃)-;
      a and b, equal to or different from each other, are integers equal to 0 or 1
   with the proviso that the block A linked to the end group T-O- has a = 1
   and the block A linked to the end group T' has b = 0;
   z is an integer higher than or equal to 2;
   z' is 0 or an integer higher than or equal to 1;
   T and T', equal to or different from each other, are hydrogen atom or a group selected from -CF₂H, -CF₂CF₂H, -CF₃, -CF₂CF₃, -CF₂CF₂CF₃, - CF₂Cl, -CF₂CF₂Cl, -C₃F₆Cl, -CF₂Br; and
   each of B and B', identical or different from each other, is a recurring unit of formula

      -[(CF₂CF₂)_{c}-(CF₂CFR^{X})_{d}]ₑ-
   wherein R^{X} is independently selected from:
      -CF₃, -OCF₃, -OC₂F₅, and -OC₃F₇ and mixtures thereof; -OCF₂OR_{f2}, wherein R_{f2} is a linear or branched C₁-C₆ perfluoroalkyl group, cyclic C₅-C₆ perfluoroalkyl group, a linear or branched C₂-C₆ perfluoroxyalkyl group;
      preferably, R_{f2} is -CF₂CF₃, -CF₂CF₂OCF₃, or -CF₃,
      c, d and e are independently an integer from 1 to 500;
      wherein (1) said recurring units -(CF₂CF₂)_{c}- and -(CF₂CFR^{X})_{d}- are statistically distributed within B and B'; and (2) recurring units of formula -(CF₂CF₂)_{c}- amount from 15 to 30 wt.% of the weight of said polymer (P), based on 100 wt.% of said polymer (P);
(II) at least one (per)fluoropolyether polymer [polymer PFPE] comprising
   - at least one (per)fluoropolyether chain [chain (R_{pf})] , and
   - two chain ends [chain (Rₑ)] bonded to opposite sides of said chain (R_{pf}),
wherein both said chains (Rₑ) comprises a group selected in the group comprising -H, -F, -Cl and a straight or branched perfluoroalkyl group comprising from 1 to 3 carbon atoms.

Advantageously, said composition (C) is characterized by a dynamic viscosity measured at 25°C and 0.1 rad/s of 60 Pa*s or higher.

Advantageously, said composition (C) is obtainable by contacting at least one polymer (P) as defined above with at least one polymer PFPE as defined above, optionally in the presence of a fluorinated solvent and/or of a fluorinated additive selected in the group comprising fluorescent agents, anti-rust additives, and the like.

The Applicant surprisingly found that by contacting said at least one polymer (P) and said polymer PFPE, an homogeneous composition is obtained, having a semi-liquid consistency and a dynamic viscosity such that said composition (C) can be used as lubricant for industrial applications, even in harsh environment.

### Detailed description of the invention

For the purpose of the present description and of the following claims:
- the use of parentheses around symbols or numbers identifying the formulae, for example in expressions like "polymer (P)", etc., has the mere purpose of better distinguishing the symbol or number from the rest of the text and, hence, said parenthesis can also be omitted;
- the acronym "PFPE" stands for "(per)fluoropolyether" and, when used as substantive, is intended to mean either the singular or the plural form, depending on the context;
- the prefix "(per)" in the term "(per)fluoropolyether" means that the polyether can be fully or partially fluorinated;
- the term "olefin" is intended to mean an unsaturated hydrocarbon containing at least one carbon-carbon double bond.

Preferably, the number average molecular weight of said polymer (P) ranges from 5000 to 150000 g/mol, more preferably from 10000 to 100000 g/mol, as determined by ¹⁹F-NMR spectroscopy.

Polymer (P) comprises recurring units of formula -(CF₂CF₂)_{c}- in an amount from 15 to 30 wt.%, more preferably from 15 to 28 wt.%, based on 100 wt.% of said polymer (P).

Preferably, polymer (P) comprises recurring units of formula -(CF₂CFR^{X})_{d}-in an amount from 4 to 20 wt.%, more preferably from 6 to 18 wt.%, based on 100 wt.% of said polymer (P).

Preferably, said chain (R_{f}) comprises, preferably consists of, repeating units R°, said repeating units being independently selected from the group consisting of:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv) -CF₂CF₂CF₂CF₂O-;
(v) -(CF₂)_{w}-CFZ-O- wherein w is an integer from 0 to 3 and Z is a group of general formula -O-R_{(f-a)}-Y, wherein R_{(f-a)} is a fluoropolyoxyalkene chain comprising a number of repeating units from 0 to 10, said recurring units being chosen among the followings : -CFXO- , -CF₂CFXO-, -CF₂CF₂CF₂O-, -CF₂CF₂CF₂CF₂O-, with each of each of X being independently F or CF₃ and Y being a C₁-C₃ perfluoroalkyl group.

Preferably, chain (R_{f}) complies with the following formulae (R_{f}-I) and (R_{f}-II): (R_{f}-I)

-[(CFX¹O)_{g1}(CFX²CFX³O)_{g2}(CF₂CF₂CF₂O)_{g3}(CF₂CF₂CF₂CF₂O)_{g4}]-

wherein
- X¹ is independently selected from -F and -CF₃,
- X², X³, equal or different from each other and at each occurrence, are independently -F, -CF₃, with the proviso that at least one of X is -F;
- g1, g2, g3, and g4, equal or different from each other, are independently ≥0, such that g1+g2+g3+g4 is in the range from 2 to 300, preferably from 10 to 250, even more preferably from 15 to 200; should at least two of g1, g2, g3 and g4 be different from zero, the different recurring units are generally statistically distributed along the chain;

   (R_{f}-II)

   -[(CFX¹O)_{g1}(CFX²CFX³O)_{g2}(CF₂CF₂CF₂O)_{g3}(CF₂CF₂CF₂CF₂O)_{g4}- (CF(CF₃)O)_{g5}(CF₂CF(CF₃)O)_{g6}]-

   wherein
   - X¹, X², X³ are as defined above;
   - g1, g2, g3, g4, g5 and g6, equal or different from each other, are independently ≥0, such that g1+g2+g3+g4+g5+g6 is in the range from 2 to 300, preferably from 10 to 250, with the proviso that at least one of g5 and g6 are different from 0.

In a preferred embodiment, chain (R_{f}) complies with formula (R_{f}-I) above.

Preferably, X and X', equal to or different from each other, are selected from -CF₂- and -CF₂CF₂-.

Preferably, T and T', equal to or different from each other, are hydrogen atom or a group selected from -CF₃, -CF₂CF₃, -CF₂CF₂CF₃, -CF₂Cl, - CF₂CF₂Cl.

Preferably, said polymer (P) is manufactured by contacting at least one peroxidic perfluoropolyether polymer, at least tetrafluoroethylene and at least one second co-monomer, in the presence of UV radiation.

Alternatively, sais polymer (P) is manufactured by contacting at least one peroxidic perfluoropolyether polymer, at least tetrafluoroethylene and at least one second co-monomer, under heating.

Said peroxidic perfluoropolyether polymer is prepared according to methods known in the art.

According to a preferred embodiment, said at least one second co-monomer is selected in the group consisting of : hexafluoropropene (HFP), perfluoro-methyl vinyl ether (PMVE), perfluoro-ethyl vinyl ether (PEVE), perfluoro-propyl vinyl ether (PPVE), perfluoromethoxy vinyl ether (MOVE) of general formula CF₂=CFOCF₂OR_{f2}, wherein R_{f2} is a linear or branched C₁-C₆ perfluoroalkyl group, cyclic C₅-C₆ perfluoroalkyl group, a linear or branched C₂-C₆ perfluoroxyalkyl group; preferably, R_{f2} is -CF₂CF₃ (MOVE1), -CF₂CF₂OCF₃ (MOVE2), or -CF₃ (MOVE3).

Advantageously, polymer (P) is in the form of a rubber-like polymer.

Preferably, said polymer PFPE comprises a linear or branched chain (R_{pf}) of formula -(X)ₐ-O-(R_{f})-(X')_{b}- in which
X, X', a, b and R_{f} are as defined above for polymer (P).

Alternatively, said polymer PFPE complies with formula (II)

T-O-[A-B]_{z}-[A-B']_{z'}-A-T' (II)

wherein T, A, B, B', T', z and z' are as defined in above for polymer (P), with the proviso that the recurring units of formula -(CF₂CF₂)_{c}- amount to less than 11 wt.% of the weight of said polymer PFPE, based on 100 wt.% of said polymer PFPE.

Preferably, said composition (C) comprises said polymer (P) in an amount from 0.5 to 85 wt.% based on the total weight of said composition (C) and said polymer PFPE in an amount from 15 to 99.5 wt.% based on the total weight of said composition (C).

The invention will be herein after illustrated in greater detail by means of the Examples contained in the following Experimental Section; the Examples are merely illustrative and are by no means to be interpreted as limiting the scope of the invention.

### Experimental section

### Materials:

Peroxidic perfluoropolyether oil having formula

TO-(CF₂CF₂O)ₘ(CF₂O)ₙ(O)ₕ-T'

wherein T and T' are chain ends selected among -CF₃, -CF₂COF, -COF, -CF₂COOH, -CF₂Cl, -CF₂CF₂Cl, was obtained by Solvay Specialty Polymers Italy S.p.A..

Tetrafluoroethylene (TFE) and perfluoro(methyl vinyl ether) (PMVE) were obtained by Solvay Specialty Polymers Italy S.p.A..

Perfluorinated solvents Galden^{®} D02 and Galden^{®} HT200 are commercially available by Solvay Specialty Polymers Italy S.p.A..

Polymer (C): Tecnoflon^{®} PFR LT
low temperature perfluoroelastomer

Polymer (D): Hyflon^{®} AD 40L
amorphous perfluorinated copolymers of 2,2,4-trifluoro-5-trifluoromethoxy-1,3-dioxide(TTD) and tetrafluoroethylene (TFE) having glass transition temperature (measured according to ASTM D3418) of 95°C and intrinsic viscosity (measured according to ASTM D2857) of 0,40 dl/g at 30°C.

### Characterization Methods:

### ¹⁹F-NMR spettroscopy:

Varian Mercury 200 MHz spectrometer working for the fluorine nucleus was used to obtain the structure, the number average molecular weight and the composition of the PFPE oils reported in the following examples. The ¹⁹F-NMR spectrum was obtained on pure samples using CFCl₃ as internal reference. Hexafluorobenzene was also used as solvent.

### Determination of the peroxidic content (PO):

Analysis of the peroxide content was carried out by iodometric titration using a Mettler DL40 device equipped with platinum electrode. The sensitivity limit for the PO determination was 0.0002%.

### Determination of the residual acidity:

Acidity content was determined by potentiometric titration with Mettler DL40 device equipped with DG 115-SC type electrode. The titration was made using aqueous solution NaOH 0.01 M as titrating agent. The sensitivity limit for the acidity determination is 0.4 meq/kg.

### Determination of the dynamic viscosity:

The dynamic viscosity was measured with frequency sweep tests, using an MCR502 Anton-Paar rheometer with parallel plate geometry (25mm diameter).

### Differential scanning calorimeter (DSC):

The thermal transitions were determined with the PerkinElmer's Pyris instrument.

### Thermogravimetric analysis (TGA):

TGA was performed with a TGA 5500 analyzer from TA Instruments with heating rate of 10°C/min in N2 atmosphere.

### Example 1 - Preparation of Polymer (A)

Polymer A was prepared using a 1000 mL cylindrical photochemical reactor equipped with a high pressure mercury lamp (HANAU TQ150), magnetic stirring, thermocouple and condenser.

The peroxidic perfluoropolyether used had number average molecular weight of 26700 g/mol; P.O.=1.51%; m/n=1.0; the chain ends T and T' were -CF₃ (90%), -CF₂COF (5%), -COF(2%), -CF₂Cl (2%), -CF₂CF₂Cl (1%).

The reactor was charged with 150.6 g of peroxidic perfluoropolyether having the chemical formula above reported and 1555 g of Galden^{®} D02. They were well mixed to have a clear homogenous solution. The reactor was kept at 20°C in a nitrogen atmosphere during the synthesis. The UV lamp was switched on, while 89 g of MVE and 53 g of TFE was fed mixed together into the reaction mixture, in a constant flow for 6 hours.

After this reaction time the lamp was switched off, the olefins flow was interrupted and the reaction mixture was flushed with nitrogen. The mixture was transferred into a second glass photochemical reactor and treated with UV light and 1 NL/h of fluorine gas at 60°C for 7 hours. The reactor content was transferred in a round bottom flask equipped with magnetic stirrer to remove solvent and residual P.O. (from 150°C to 230°C).

195.7 g of a rubber-like polymer were found.

Acidity and PO were below the sensitivity limit of the analytical methods.

The polymer [polymer (A)] obtained had the following structure:

TO-(CF₂O)_{g1}(CF₂CF₂O)_{g2}(CF₂CF₂CF₂O)_{g3}(CF₂CF₂CF₂CF₂O)_{g4}(BO)_{g5}-T'

where B was a block copolymer that comprise TFE and PMVE units randomly distributed.

The number average molecular weight was 29000 g/mol; the g2/g1 ratio was 0.9. The overall weight amount of blocks B in the polymer, calculated by ¹⁹F-NMR analysis, was 34% (24% w/w from TFE and 10% w/w from PMVE). The chain ends T and T' were -CF₃ (97%), -CF₂Cl (2%), -CF₂CF₂Cl (1%).

The DSC analysis indicated the occurrence of a single glass transition at -103°C. The TGA analysis found the product to be stable at high temperature (1% loss at 362°C).

### Comparative Example 2 - Preparation of co-polymer PFPE-PMVE (Polymer B1-C)

The synthesis of Polymer B1-C containing units of PMVE was carried out a 1000 mL cylindrical photochemical reactor equipped with a high pressure mercury lamp (HANAU TQ150), magnetic stirring, thermocouple and condenser.

1260 g of Galden^{®}HT200 were introduced into the reactor with 272 g of a peroxidic perfuoropolyether having the chemical formula above reported and Mn=32900 g/mol, P.O.=1.50%, m/n=1.0; the chain ends T and T' were -CF₃ (55%), -CF₂COF (27%), -COF(10%), -CF₂Cl (5%), -CF₂CF₂Cl (3%).

The reactor was cooled at about 10°C under stirring in nitrogen atmosphere. When the mixture was homogeneous and the temperature was reached, the UV lamp was switched on and PMVE was fed.

The reaction was run for 6 hours, in which 111 g of PMVE were flushed in a constant flow. At the end, the UV lamp was switched off and the feeding of PMVE was interrupted. The reaction mixture was analyzed and a residual PO of 0.16%, referred to the PFPE, was measured. The mixture was transferred into a second glass photochemical reactor and treated with UV light and 1 NL/h of fluorine gas at 60°C for 13 hours. Then, the reaction mixture was transferred in a round bottom flask equipped with magnetic stirrer and it was submitted to vacuum distillation for solvent and residual P.O. removal (from 150°C to 230°C).

262 g of oil (Polymer B1-C) were obtained and characterized.

Acidity and PO were below the sensitivity limit of the analytical methods. ¹⁹F-NMR analysis confirms the following structure:

TO-(CF₂O)_{g1}(CF₂CF₂O)_{g2}(CF₂CF₂CF₂O)_{g3}(CF₂CF₂CF₂CF₂O)_{g4}

(CF₂CF(OCF₃)O)_{g5}-T'

wherein the number average molecular weight was 36000, the ratio g2/g1 was 0.9, g3 was 2.0 and g4 was 2.5.

The percentage of (CF₂CF(OCF₃)O) unit in the polymer was 12.3%, calculated by ¹⁹F-NMR analysis. T and T' were -CF₃ (92%), -CF₂Cl (5%), -CF₂CF₂Cl (3%).

### Comparative Example 3 - Preparation of co-polymer PFPE-TFE-PMVE (Polymer B2-C)

420g of Galden^{®}HT230 were introduced into the reactor together with 100 g of a peroxidic perfuoropolyether (PFPE) of formula:

TO-(CF₂O)ᵣ(CF₂CF₂O)ₛ(O)ₜ-T'

wherein T and T' were -CF₃ (45%), -CF₂Cl (13%), -CF₂CF₂Cl (7%) and - CF₂COF (35%), having number average molecular weight (Mn) equal to 41500, s/r=1.09 and a PO equal to 1.26%.

The reactor was cooled at about 10°C under stirring in nitrogen atmosphere. As the temperature was reached, the UV lamp was switched on and the fluorinated monomers (PMVE and TFE) were feed by the same inlet (the flow-rate of TFE was 1.8 NI/h and of PMVE was 1.0 NI/h).

The mixture was then maintained in these conditions for 6 hours. Then, the UV lamp was switched off and the feeding of TFE and PMVE was interrupted. The temperature was raised up to RT under nitrogen flow.

The resulting mixture was transferred into a second glass reactor, treated at 230°C for 5 hours and then fluorinated at 180°C with1 NI/h of fluorine gas for a total of 24 hours.

106 g of a viscous oil were recovered after vacuum distillation of the solvent (Galden^{®}HT230).

The product was subjected to acidity and PO measurement, which resulted lower than the sensitivity limit of the methods.

¹⁹F-NMR analysis confirm the following structure for Polymer B2-C:

TO-(CF₂O)_{g1}(CF₂CF₂O)_{g2}(CF₂CF₂CF₂O)_{g3}(CF₂CF₂CF₂CF₂O)_{g4}(BO)_{q}-T'

wherein
the ratio g2/g1 was 0.91;
g3 and g4 were 2.4 and 2.3 respectively,
B was -(CFX)_{y}- wherein X was -F and -OCF₃ and the y average length was 27.0;
q was 5.0.

The percentage of -(BO)_{q}- in the final polymer was 19.2% by weight based on the total weight of the polymer, coming from TFE (10.8% w/w) and PMVE (8.4% w/w); T and T' were -CF₃ (81%) and the remaining part (19%) was -CF₂Cl and -CF₂CF₂Cl.

The number average molecular weight (Mn) was equal to 42800.

### Example 4 - Preparation of Base Oil

The base Oil was obtained using a 1000 mL cylindrical photochemical reactor equipped with a high pressure mercury lamp (HANAU TQ150), magnetic stirring, thermocouple and condenser.

The peroxidic perfluoropolyether used had number average molecular weight of 42700 g/mol; P.O.=1.54%; m/n=0.9. The chain ends T and T' were -CF₃ (79%), -CF₂COF (14%), -COF(3%), -CF₂Cl (2%), -CF₂CF₂Cl (2%).

The reactor was charged with 271.6 g of peroxidic perfluoropolyether and 1250 g of Galden^{®} HT200. They were well mixed to have a clear homogenous solution. The reactor was kept at 20°C in a nitrogen atmosphere during the synthesis. The UV lamp was switched on, while 64 g of PMVE and 44.4 g of TFE were fed and mixed together into the reaction mixture, in a constant flow for 4 hours.

After this reaction time the lamp was switched off, the olefins flow was interrupted and the reaction mixture was flushed with nitrogen. The mixture was transferred into a second glass photochemical reactor and treated with UV light and 1 NL/h of fluorine gas at 60°C for 7 hours. The reactor content was transferred in a round bottom flask equipped with magnetic stirrer to remove solvent and residual P.O. (from 150°C to 230°C). 259.2 g of a viscous oil were found. Acidity and PO were below the sensitivity limit of the analytical methods.

The Base Oil obtained has the following structure:

TO-(CF₂O)_{g1}(CF₂CF₂O)_{g2}(CF₂CF₂CF₂O)_{g3}(CF₂CF₂CF₂CF₂O)_{g4}(BO)_{g5}-T'

where B was a block copolymer that comprise TFE and PMVE units randomly distributed.

The number average molecular weight was 40000 g/mol; the g2/g1 ratio was 0.9; g3=4.2; g4=4.4.

The overall weight amount of blocks B in the polymer, measured by ¹⁹F-NMR analysis, was 17.3 % (9.5 % w/w from TFE and 7.8 % w/w from PMVE). The chain ends T and T' were -CF₃ (96%), -CF₂Cl (2%), -CF₂CF₂Cl (2%).

The value of dynamic viscosity at 0.1 rad/s and 25°C was 46.9 Pa*s.

### Example 5 - Preparation of Compositions in the presence of solvent

Each of Polymer A, Polymer C and Polymer D was weighed in the amount of 5 g or 10 g and dissolved in a glass flask, with 100 g of Galden^{®} HT55 as solvent.

Each mixture was heated to the solvent reflux and kept under stirring for one hour. At the end of the stirring, the solutions were homogeneous.

Then, 90 g of the Base Oil (prepared as described in Example 4) was weighed and dissolved in a glass flask, with 100 g of Galden^{®} HT55 as solvent. The mixture was heated to the solvent reflux and kept under stirring for one hour. At the end of the stirring, the mixture was analysed by visual inspection. The solution was homogeneous.

Each solution obtained from Polymer A, Polymer C and Polymer D was unified with the Base Oil solution, and the solvent was stripped at 150°C under vacuum.

The aspect of the final Compositions was analysed by visual inspection and the dynamic viscosity was measured at 25°C.

The results are reported in the following Table 1.

| Composition No. | Ingredients | Aspect of the solution (visual inspection) | Dynamic viscosity @25°C and 0.1 rad/s (Pa*s) |
|---|---|---|---|
| 1 | Base Oil + 5wt.% polymer A | Homogeneous | 64 |
| 2 | Base Oil + 10wt.% polymer A | Homogeneous | 136 |
| 3(*) | Base Oil | Homogeneous | 46 |
| 4(*) | Base Oil + 1 wt.% polymer (D) | Homogeneous | 53 |
| 5(*) | Base Oil + 5 wt.% polymer (D) | Incomplete dissolution | not performed |
| 6(*) | Base Oil + 1 wt.% polymer (C) | Homogeneous | 51 |
| 7(*) | Base Oil + 3 wt.% polymer (C) | Homogeneous | 50 |
| 8(*) | Base Oil + 5 wt.% polymer (C) | Incomplete dissolution | not performed |

| | | | |
|---|---|---|---|
| (*) comparison | | | |

### Example 6 - Preparation of Compositions without solvent

5g of Polymer A were weighed and mixed with 95 g of the Base Oil prepared as described above.

The mixture was heated to 130°C and stirred for 2 hours.

The solution (Composition 9) thus obtained was homogeneous.

## Claims

1. A composition [composition (C)] comprising :
(I) at least one polymer [polymer (P)] complying with chemical formula (1)
T-O-[A-B]_{z}-[A-B']_{z'}-A-T' (I)
A is -(X)ₐ-O-(R_{f})-(X')_{b}- in which
(R_{f}) is a fully or partially fluorinated polyoxyalkylene chain,
X and X', equal to or different from each other, are selected from
-CF₂-, -CF₂CF₂- and -CF(CF₃)-;
a and b, equal to or different from each other, are integers equal to 0
or 1
with the proviso that the block A linked to the end group T-O- has a = 1 and the block A linked to the end group T' has b = 0;
z is an integer higher than or equal to 2;
z' is 0 or an integer higher than or equal to 1;
T and T', equal to or different from each other, are hydrogen atom or a group selected from -CF₂H, -CF₂CF₂H, -CF₃, -CF₂CF₃, -CF₂CF₂CF₃, - CF₂Cl, -CF₂CF₂Cl, -C₃F₆Cl, -CF₂Br; and
each of B and B', identical or different from each other, is a recurring unit of formula
-[(CF₂CF₂)_{c}-(CF₂CFR^{X})_{d}]ₑ-
wherein R^{X} is independently selected from:
-CF₃, -OCF₃, -OC₂F₅, and -OC₃F₇ and mixtures thereof; -OCF₂OR_{f2},
wherein R_{f2} is a linear or branched C₁-C₆ perfluoroalkyl group, cyclic C₅-C₆ perfluoroalkyl group, a linear or branched C₂-C₆ perfluoroxyalkyl group; preferably, R_{f2} is -CF₂CF₃, -CF₂CF₂OCF₃, or -CF₃, c, d and e are independently an integer from 1 to 500;
wherein
(1) said recurring units -(CF₂CF₂)_{c}- and -(CF₂CFR^{X})_{d}- are statistically distributed within B and B'; and
(2) recurring units of formula -(CF₂CF₂)_{c}- amount from 15 to 30 wt.% of the weight of said polymer (P), based on 100 wt.% of said polymer (P);
(II) at least one (per)fluoropolyether polymer [polymer PFPE] comprising
- at least one (per)fluoropolyether chain [chain (R_{pf})] , and
- two chain ends [chain (Rₑ)] bonded to opposite sides of said chain (R_{pf}), wherein both said chains (Rₑ) comprises a group selected in the group comprising -H, -F, -Cl and a straight or branched perfluoroalkyl group comprising from 1 to 3 carbon atoms.

2. The composition (C) according to Claim 1, wherein said composition (C) has a dynamic viscosity measured at 25° C and 0.1 rad/s according to the method described in the section Characterization methods, of 60 Pa*s or higher.

3. The Composition (C) according to Claim 1, wherein said polymer (P) has a number average molecular weight from 5000 to 150000 g/mol, more preferably from 10000 to 100000 g/mol, as determined by ¹⁹F-NMR spectroscopy on pure samples using CFCl3 as internal reference.

4. The composition (C) according to Claim 1, wherein polymer (P) comprises recurring units of formula -(CF₂CF₂)_{c}- in an amount from 15 to 28 wt.%, based on 100 wt.% of said polymer (P).

5. The composition (C) according to Claim 1, wherein polymer (P) comprises recurring units of formula -(CF₂CFR^{X})_{d}- in an amount from 4 to 20 wt.%, more preferably from 6 to 18 wt.%, based on 100 wt.% of said polymer (P).

6. The composition (C) according to Claim 1, wherein said chain (R_{_{f}}7. comprises, preferably consists of, repeating units R° , said repeating units being independently selected from the group consisting of:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv) -CF₂CF₂CF₂CF₂O-;
(v) -(CF₂)_{w}-CFZ-O- wherein w is an integer from 0 to 3 and Z is a group of general formula -O-R_{(f-a)}-Y, wherein R_{(f-a)} is a fluoropolyoxyalkene chain comprising a number of repeating units from 0 to 10, said recurring units being chosen among the followings : - CFXO- , -CF₂CFXO-, -CF₂CF₂CF₂O-, -CF₂CF₂CF₂CF₂O-, with each of each of X being independently F or CF₃ and Y being a C₁-C₃ perfluoroalkyl group.

7. The composition (C) according to Claim 1, wherein said polymer PFPE comprises a linear or branched chain (R_{pf}) of formula
-(X)ₐ-O-(R_{f})-(X')_{b}-
in which
X, X', a, b and R_{f} are as defined in Claim 1 for polymer (P).

8. The composition (C) according to Claim 1, wherein said polymer PFPE complies with formula (II)
T-O-[A-B]_{z}-[A-B']_{z'}-A-T' (II)
wherein T, A, B, B', T', z and z' are as defined in Claim1, with the proviso that the recurring units of formula -(CF₂CF₂)_{c}- amount to less than 11 wt.% of the weight of said polymer PFPE, based on 100 wt.% of said polymer PFPE.

9. The composition (C) according to anyone of the preceding Claims, wherein said polymer (P) is in an amount from 0.5 to 85 wt.% based on the total weight of said composition (C) and said polymer PFPE is in an amount from 15 to 99.5 wt.% based on the total weight of said composition (C).

## Patentansprüche

1. Zusammensetzung [Zusammensetzung (C)], umfassend:
(I) mindestens ein Polymer [Polymer (P)], das der chemischen Formel (I) entspricht:
T-O-[A-B]_{z}-[A-B']_{z'}-A-T' (I)
A für -(X)ₐ-O-(R_{f})-(X')_{b}- steht, wobei
(R_{f}) für eine voll- oder teilfluorierte Polyoxyalkylenkette steht,
X und X', die gleich oder voneinander verschieden sind, aus -CF₂-, -CF₂CF₂- und -CF(CF₃)- ausgewählt sind;
a und b, die gleich oder voneinander verschieden sind, für ganze Zahlen gleich 0
oder 1 stehen,
mit der Maßgabe, dass der Block A, der mit der Endgruppe T-O- verknüpft ist, a = 1 aufweist, und der Block A, der mit der Endgruppe T' verknüpft ist, b = 0 aufweist;
z für eine ganze Zahl größer oder gleich 2 steht;
z' für 0 oder eine ganze Zahl größer oder gleich 1 steht; T und T', die gleich oder voneinander verschieden sind, für ein Wasserstoffatom oder eine Gruppe, die aus -CF₂H, -CF₂CF₂H, -CF₃, -CF₂CF₃, -CF₂CF₂CF₃, -CF₂Cl, -CF₂CF₂Cl, - C₃F₆Cl, -CF₂Br ausgewählt ist, stehen; und
B und B', die gleich oder voneinander verschieden sind, für eine Wiederholungseinheit der folgenden Formel stehen:
- [(CF₂CF₂)_{c}-(CF₂CFR^{X})_{d}]ₑ-
wobei R^{X} unabhängig ausgewählt ist aus:
-CF₃, -OCF₃, -OC₂F₅ und -OC₃F₇ und Mischungen davon; - OCF₂OR_{f2},
wobei R_{f2} für eine lineare oder verzweigte C₁-C₆-Perfluoralkylgruppe, eine cyclische C₅-C₆-Perfluoralkylgruppe, eine lineare oder verzweigte C₂-C₆-Perfluoroxyalkylgruppe steht; vorzugsweise R_{f2} für - CF₂CF₃, -CF₂CF₂OCF₃ oder -CF₃ steht,
c, d und e unabhängig voneinander für eine ganze Zahl von 1 bis 500 stehen;
wobei
(1) die Wiederholungseinheiten -(CF₂CF₂)_{c}- und - (CF₂CFR^{X})_{d}- in B und B' statistisch verteilt sind; und
(2) Wiederholungseinheiten der Formel -(CF₂CF₂)_{c}- 15 bis 30 Gew.-% des Gewichts des Polymers (P), bezogen auf 100 Gew.-% des Polymers (P), ausmachen;
(II) mindestens ein (Per)fluorpolyetherpolymer [Polymer PFPE], umfassend
- mindestens eine (Per)fluorpolyetherkette [Kette (R_{pf})] und
- zwei Kettenenden [Kette (Rₑ)], die an entgegengesetzte Seiten der Kette (R_{pf}) gebunden sind, wobei beide Ketten (Rₑ) eine Gruppe umfassen, die aus der Gruppe ausgewählt ist, die -H, -F, -Cl und eine gerade oder verzweigte Perfluoralkylgruppe mit 1 bis 3 Kohlenstoffatomen umfasst.

2. Zusammensetzung (C) nach Anspruch 1, wobei die Zusammensetzung (C) eine bei 25 °C und 0,1 Rad/s nach der im Abschnitt Charakterisierungsmethoden beschriebenen Methode gemessene dynamische Viskosität von 60 Pa*s oder mehr aufweist.

3. Zusammensetzung (C) nach Anspruch 1, wobei das Polymer (P) ein zahlenmittleres Molekulargewicht von 5000 bis 150.000 g/mol, weiter bevorzugt von 10.000 bis 100.000 g/mol, gemäß Bestimmung durch ¹⁹F-NMR-Spektroskopie an reinen Proben unter Verwendung von CFCl3 als interne Referenz aufweist.

4. Zusammensetzung (C) nach Anspruch 1, wobei Polymer (P) Wiederholungseinheiten der Formel -(CF₂CF₂)- in einer Menge von 15 bis 28 Gew.-%, bezogen auf 100 Gew.-% des Polymers (P), umfasst.

5. Zusammensetzung (C) nach Anspruch 1, wobei Polymer (P) Wiederholungseinheiten der Formel -(CF₂CFR^{X})_{d}- in einer Menge von 4 bis 20 Gew.-%, weiter bevorzugt von 6 bis 18 Gew.-%, bezogen auf 100 Gew.-% des Polymers (P), umfasst.

6. Zusammensetzung (C) nach Anspruch 1, wobei die Kette (R_{f}) Wiederholungseinheiten R° umfasst und vorzugsweise daraus besteht, wobei die Wiederholungseinheiten unabhängig aus der Gruppe ausgewählt sind, die aus Folgendem besteht:
(i) -CFXO-, wobei X für F oder CF₃ steht;
(ii) -CFXCFXO-, wobei X bei jedem Auftreten gleich oder verschieden ist und für F oder CF₃ steht, mit der Maßgabe, dass mindestens eines von X für -F steht;
(iii) -CF₂CF₂CW₂O-, wobei W jeweils gleich oder voneinander verschieden ist und für F, Cl oder H steht;
(iv) -CF₂CF₂CF₂CF₂O-;
(v) -(CF₂)_{w}-CFZ-O-, wobei w für eine ganze Zahl von 0 bis 3 steht und Z für eine Gruppe der allgemeinen Formel -O-R_{(f-a)}-Y steht, wobei R_{(f-a)} für eine Fluorpolyoxyalkenkette mit einer Zahl von Wiederholungseinheiten von 0 bis 10 steht, wobei die Wiederholungseinheiten aus den Folgenden ausgewählt sind: -CFXO-, -CF₂CFXO-, -CF₂CF₂CF₂O-, -CF₂CF₂CF₂CF₂O-, wobei X jeweils unabhängig für F oder CF₃ steht und Y für eine C₁-C₃-Perfluoralkylgruppe steht.

7. Zusammensetzung (C) nach Anspruch 1, wobei das Polymer PFPE eine lineare oder verzweigte Kette (R_{pf}) der folgenden Formel umfasst:
-(X)ₐ-O-(R_{f})-(X')_{b}-
in der
X, X', a, b und R_{f} wie in Anspruch 1 für Polymer (P) definiert sind.

8. Zusammensetzung (C) nach Anspruch 1, wobei das Polymer PFPE der folgenden Formel (II) entspricht:
T-O-[A-B]_{z}-[A-B']_{z'}-A-T' (II)
wobei T, A, B, B', T', z und z' wie in Anspruch 1 definiert sind, mit der Maßgabe, dass die Wiederholungseinheiten der Formel (CF₂CF₂)_{c}- weniger als 11 Gew.-% des Gewichts des Polymers PFPE, bezogen auf 100 Gew.-% des Polymers PFPE, ausmachen.

9. Zusammensetzung (C) nach einem der vorhergehenden Ansprüche, wobei das Polymer (P) in einer Menge von 0,5 bis 85 Gew.-%, bezogen auf das Gesamtgewicht der Zusammensetzung (C), vorliegt und das Polymer PFPE in einer Menge von 15 bis 99,5 Gew.-%, bezogen auf das Gesamtgewicht der Zusammensetzung (C), vorliegt.

## Revendications

1. Composition [composition (C)] comprenant :
(I) au moins un polymère [polymère (P)] répondant à la formule chimique (I)
T-O-[A-B]_{z}-[A-B']_{z'}-A-T' (I)
A est -(X)ₐ-O-(R_{f})-(X')_{b}- dans lequel
(R_{f}) est une chaîne polyoxyalkylène entièrement ou partiellement fluorée,
X et X', égaux ou différents l'un de l'autre, sont choisis parmi -CF₂-, -CF₂CF₂- et -CF(CF₃)-;
a et b, égaux ou différents l'un de l'autre, sont des entiers égaux à 0
ou 1
à condition que le bloc A lié au groupe terminal T-O- ait a = 1 et que le bloc A lié au groupe terminal T' ait b = 0;
z est un entier supérieur ou égal à 2 ;
z' est 0 ou un entier supérieur ou égal à 1 ;
T et T', égaux ou différents l'un de l'autre, sont un atome d'hydrogène ou un groupe choisi parmi -CF₂H, - CF₂CF₂H, -CF₃, -CF₂CF₃, -CF₂CF₂CF₃, -CF₂Cl, -CF₂CF₂Cl, - C₃F₆Cl, -CF₂Br ; et
chacun de B et B', identiques ou différents l'un de l'autre, est une unité récurrente de formule
- [(CF₂CF₂)_{c}-(CF₂CFR^{X})_{d}]ₑ-
où R^{X} est indépendamment sélectionné parmi :
-CF₃, -OCF₃, -OC₂F₅, et -OC₃F₇ et leurs mélanges ; - OCF₂OR_{f2},
où R_{f2} est un groupe perfluoroalkyle en C₁-C₆ linéaire ou ramifié, un groupe perfluoroalkyle en C₅-C₆ cyclique, un groupe perfluoroxyalkyle en C₂-C₆ linéaire ou ramifié; de préférence, R_{f2} est -CF₂CF₃, -CF₂CF₂OCF₃, ou -CF₃,
c, d et e sont indépendamment un entier de 1 à 500 ;
dans laquelle
(1) lesdites unités récurrentes -(CF₂CF₂)_{c}- et - (CF₂CFR^{X})_{d}- sont réparties statistiquement dans B et B' ; et
(2) les unités récurrentes de formule -(CF₂CF₂)_{c}-représentent de 15 à 30 % en poids du poids dudit polymère (P), sur la base de 100 % en poids dudit polymère (P) ;
(II) au moins un polymère de (per)fluoropolyéther [PFPE polymère] comprenant
- au moins une chaîne (per)fluoropolyéther [chaîne (R_{pf})] et
- deux extrémités de chaîne [chaîne (Rₑ)] liées à des côtés opposés de ladite chaîne (R_{pf}), dans laquelle lesdites deux chaînes (Rₑ) comprennent un groupe choisi dans le groupe comprenant -H, -F, -Cl et un groupe perfluoroalkyle linéaire ou ramifié comprenant de 1 à 3 atomes de carbone.

2. Composition (C) selon la revendication 1, dans laquelle ladite composition (C) a une viscosité dynamique mesurée à 25 °C et 0,1 rad/s selon le procédé décrit dans la section méthodes de caractérisation, de 60 Pa*s ou plus.

3. Composition (C) selon la revendication 1, dans laquelle ledit polymère (P) a un poids moléculaire moyen en nombre de 5 000 à 150 000 g/mol, plus préférablement de 10 000 à 100 000 g/mol, tel que déterminé par spectroscopie RMN ¹⁹F sur des échantillons purs en utilisant CFC13 comme référence interne.

4. Composition (C) selon la revendication 1, dans laquelle le polymère (P) comprend des unités récurrentes de formule -(CF₂CF₂)_{c}- en une quantité de 15 à 28 % en poids, sur la base de 100 % en poids dudit polymère (P).

5. Composition (C) selon la revendication 1, dans laquelle le polymère (P) comprend des unités récurrentes de formule -(CF₂CFR^{X})_{d}- en une quantité de 4 à 20 % en poids, plus préférablement de 6 à 18 % en poids, sur la base de 100 % en poids dudit polymère (P).

6. Composition (C) selon la revendication 1, dans laquelle ladite chaîne (R_{f}) comprend des, préférablement est constituée de, unités récurrentes R°, lesdites unités récurrentes étant indépendamment choisies dans le groupe constitué par :
(i) -CFXO-, où X est F ou CF₃ ;
(ii) -CFXCFXO-, où X, identique ou différent à chaque occurrence, est F ou CF₃, à condition qu'au moins l'un des X soit -F ;
(iii) -CF₂CF₂CW₂O-, où chaque W, identique ou différent des autres, est F, Cl, H ;
(iv) -CF₂CF₂CF₂CF₂O- ;
(v) -(CF₂)ⱼ-CFZ-O- où w est un entier de 0 à 3 et Z est un groupe de formule générale -O-R_{(f-a)}-Y, où R_{(f-a)} est une chaîne fluoropolyoxyalcène comprenant un de unités récurrentes de 0 à 10, lesdits unités récurrentes étant choisis parmi les suivants : -CFXO-, -CF₂CFXO-, - CF₂CF₂CF₂O-, -CF₂CF₂CF₂CF₂O-, chacun parmi X étant indépendamment F ou CF₃ et Y étant un groupe C₁-C₃ perfluoroalkyle.

7. Composition (C) selon la revendication 1, dans laquelle ledit polymère PFPE comprend une chaîne linéaire ou ramifiée (R_{pf}) de formule
-(X)ₐ-O-(R_{f})-(X')_{b}-
dans laquelle
X, X', a, b et R_{f} sont tels que définis dans la revendication 1 pour le polymère (P).

8. Composition (C) selon la revendication 1, dans laquelle ledit polymère PFPE répond à la formule (II)
T-O-[A-B]_{z}-[A-B']_{z'}-A-T' (II)
où T, A, B, B', T', z et z' sont tels que définis dans la revendication 1, à condition que les unités récurrentes de formule -(CF₂CF₂)_{c}- représentent moins de 11 % en poids du poids dudit polymère PFPE, sur la base de 100 % en poids dudit polymère PFPE.

9. Composition (C) selon l'une quelconque des revendications précédentes, dans laquelle ledit polymère (P) est présent en une quantité de 0,5 à 85 % en poids par rapport au poids total de ladite composition (C) et ledit polymère PFPE est présent en une quantité de 15 à 99,5 % en poids par rapport au poids total de ladite composition (C).
